# FASCICULE DE BREVET EUROPEEN

(11) **EP 0 711 587 B1**
(45) Date de publication et mention de la délivrance du brevet: **22.08.2001**
(21) Numéro de dépôt: 95410125.9
(22) Date de dépôt: 02.11.1995
(51) Int. Cl.: B01D 27/06, B01D 46/52

(54) **Cartouche filtrante à couronne mobile de maintien**
Filterkartusche mit beweglichem Haltekranz
Filter cartridge with movable holding rim

(30) Priorité: 09.11.1994 FR 9413785
(43) Date de publication de la demande: 15.05.1996
(73) Titulaire: SOCIETE SIEBEC, 38600 Fontaine (FR)
(72) Inventeur: Villette, Guy, F-06460 Saint Vallier de Thiey (FR)
(74) Mandataire: Hecké, Gérard

(56) Documents cités:
- DE-U- 1 922 535
- DE-U- 6 610 045
- GB-A- 2 136 278
- US-A- 4 547 950
- DATABASE WPI Week 9429 7 Septembre 1994 Derwent Publications Ltd., London, GB; AN 94-240303 & SU-A-1 813 498 (KUZBASS POLY) 7 Mai 1993

## Description

L'invention est relative à une cartouche cylindrique d'un filtre de traitement de fluide comprenant :
- deux plateaux espacés,
- un élément filtrant de révolution en média filtrant plissé, intercalé entre les plateaux et ayant deux fonds solidarisés auxdits plateaux,
- un canal axial interne confiné par l'élément filtrant, pour le passage du fluide passant radialement à travers l'élément filtrant,
- au moins une couronne de renforcement annulaire pour rigidifier l'élément filtrant, et maintenir les plis, la couronne ceinturant extérieurement l'élément filtrant, sur une hauteur limitée, sans être assujettie fixement à ce dernier,
- la face interne de ladite couronne mobile présente des dents réparties en saillie radiale vers l'intérieur pour s'insérer entre les plis, et maintenir l'écartement entre ces derniers, le pas d'écartement des dents correspondant à celui des plis successifs de l'élément filtrant.

Le médian filtrant plissé, dénommé par la suite papier, présente une certaine souplesse et comme les plis ne sont maintenus que par leurs extrémités, collées aux plateaux, des déformations et des détériorations des plis sont fréquentes, en particulier lorsque la hauteur de la cartouche est grande. Pour pallier cet inconvénient on a déjà proposé de solidariser entre eux les plis dans leur partie intermédiaire, par exemple à mi-hauteur, par une ceinture de colle ou par un collier ondulé solidarisé au papier. La mise en oeuvre de cette colle est compliquée et la ceinture rigide constitue un obstacle au bon nettoyage de la cartouche par un jet d'eau sous pression. Sous l'action du jet, la colle se fracture et la ceinture est rapidement détériorée.

Le document DE-U-1922535 décrit une cartouche d'un filtre ayant un élément filtrant en média plissé. Le filtre est doté d'une couronne de renforcement annulaire pour rigidifier l'élément filtrant, et maintenir les plis.

La présente invention a pour objet de permettre la réalisation d'une cartouche perfectionnée, dont la fabrication et le nettoyage sont simples.

La cartouche selon l'invention est caractérisée en ce que la couronne est accessible en étant maintenue par simple friction sur les plis, et est déplaçable en direction axiale par coulissement vers l'un des plateaux lors du nettoyage de la cartouche.

La cartouche est de préférence de forme cylindrique creuse, avec un tube axial, qui gaine intérieurement l'élément filtrant et recueille le fluide passant radialement à travers l'élément filtrant, généralement de l'extérieur vers l'intérieur. Un filet souple peut être glissé de la manière usuelle sur la cartouche, ce filet étant enlevé avant le déplacement de la couronne et le nettoyage.

D'autres avantages et caractéristiques ressortiront plus clairement de la description qui va suivre d'un mode de mise en oeuvre de l'invention donné à titre d'exemple et représenté aux dessins annexés, dans lesquels:

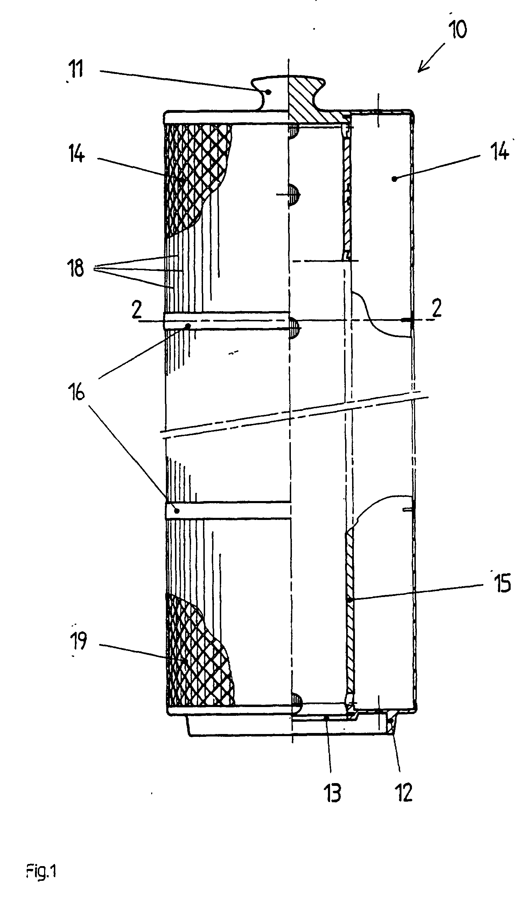

la figure 1 est une vue schématique, en élévation sur la demi-vue de gauche et en coupe axiale sur le demi-vue de droite, d'une cartouche selon l'invention;
la figure 2 est une vue partielle en coupe suivant la ligne 2-3 de la figure 1, à échelle agrandie.

Sur les figures une cartouche 10, notamment d'un filtre de traitement de fluide, par exemple de piscine, est en forme de cylindre creux allongé, dont le fond supérieur est constitué par un plateau 11, en forme de disque plein et le fond inférieur par un plateau 12, en forme de disque ayant un trou central 13. Un tube perforé 15 s'étend axialement entre les plateaux 11,12 sur toute la hauteur de la cartouche 10 et se raccorde au trou central 13. Le tube 15 gaine intérieurement un élément filtrant 14, en papier ou autre média plissé en accordéon, intercalé entre les deux plateaux 11,12. Les plateaux 11,12 et le tube perforé 15 sont par exemple en matière plastique et les extrémités des plis 18 du papier de l'élément filtrant 14 sont collées aux plateaux 11,12. L'ensemble plateaux 11,12, élément filtrant 14 et tube perforé 15 constitue une cartouche de filtration 10, bien connue, pouvant être introduite dans une cuve (non représentée) parcourue par le fluide à filtrer. Le fluide passe radialement à travers l'élément filtrant 14 de l'extérieur vers l'intérieur et s'écoule par le tube perforé 15 et le trou central 13. La cartouche 10 est retirée périodiquement de la cuve et nettoyée, notamment au jet d'eau.

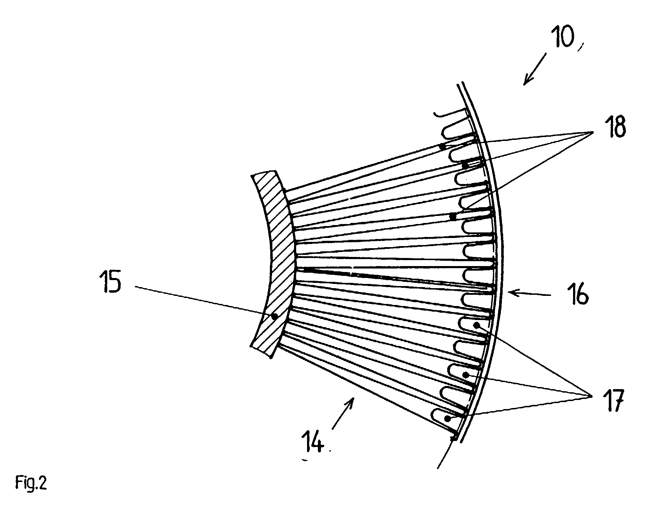

Selon l'invention une ou plusieurs couronnes mobiles 16 sont enfilées et réparties le long de la surface externe de l'élément filtrant 14. En se référant à la figure 2 on voit que la face interne de la couronne mobile 16 porte des dents 17, dont le pas correspond à celui des plis 18 de papier. Ces dents 17 pénètrent entre les plis 18 sur une faible profondeur, notamment sur une fraction de la profondeur des plis 18 et remplissent les espaces entre les plis 18 pour maintenir ces derniers. La hauteur de la couronne mobile 16 est faible, de façon à ne pas réduire notablement la surface active de la cartouche et permettre d'une part le maintien en position de la couronne mobile 16 par simple friction sur le papier et d'autre part permettre le coulissement de la couronne mobile 16 le long de l'élément filtrant 14 sans exercer un effort excessif. La couronne mobile 16 est en polypropylène, qui lui assure une rigidité suffisante tout en lui conférant une certaine souplesse facilitant son coulissement.

Les couronnes mobiles 16 sont simplement enfilées sur l'élément filtrant 14 avant la mise en place des plateaux 11,12 ou tout au moins de l'un de ces plateaux et un filet 19 peut être enfilé sur l'ensemble. Lors d'un nettoyage de la cartouche 10, il suffit de retirer le filet 19 et de glisser les couronnes mobiles 16 à proximité ou en appui de l'un des plateaux 11,12. Par la suite les couronnes mobiles 16 et le filet 19 sont remis en place et la cartouche est prête à l'emploi.

Il est clair que la couronne mobile selon l'invention peut être appliquée à d'autres types de filtres, par exemple à une cartouche ayant une autre forme de révolution ou à une cartouche démunie d'un tube perforé, que les matériaux, notamment le papier, peuvent être différents et que le filtre peut être utilisé au traitement de différents fluides, en particulier de l'eau.

## Revendications

1. Cartouche (10) cylindrique d'un filtre de traitement de fluide comprenant :
- deux plateaux (11,12) espacés,
- un élément filtrant (14) de révolution en média filtrant plissé, intercalé entre les plateaux (11,12), et ayant deux fonds solidarisés auxdits plateaux,
- un canal axial interne confiné par l'élément filtrant, pour le passage du fluide passant radialement à travers l'élément filtrant (14),
- au moins une couronne (16) de renforcement annulaire pour rigidifier l'élément filtrant (14), et maintenir les plis (18), la couronne (16) ceinturant extérieurement l'élément filtrant (14), sur une hauteur limitée, sans être assujettie fixement à ce dernier,
- la face interne de ladite couronne mobile (16) présente des dents (17) réparties en saillie radiale vers l'intérieur pour s'insérer entre les plis (18), et maintenir l'écartement entre ces derniers, le pas d'écartement des dents (17) correspondant à celui des plis (18) successifs de l'élément filtrant (14),
caractérisée en ce que la couronne (16) est accessible en étant maintenue par simple friction sur les plis (18), et est déplaçable en direction axiale par coulissement vers l'un des plateaux (10, 11) lors du nettoyage de la cartouche (10).

2. Cartouche selon la revendication 1, caractérisée en ce que la profondeur des dents (17) est une fraction de la profondeur des plis (18) de l'élément filtrant (14).

3. Cartouche selon la revendication 1, caractérisée en ce que l'élément filtrant (14) est gainé intérieurement par un tube perforé (15) constituant ledit canal.

4. Cartouche selon la revendication 1, caractérisée en ce que plusieurs couronnes mobiles (16) sont échelonnées le long de l'élément filtrant (14).

5. Cartouche selon l'une quelconque des revendications précédentes, caractérisée en ce que la couronne mobile (16) est en une matière plastique, notamment en polypropylène.

6. Cartouche selon l'une quelconque des revendications précédentes, caractérisée en ce que l'élément filtrant (14) est en forme de cylindre creux, dont les deux fonds sont coiffés par lesdits plateaux (11, 12), auxquels ils sont solidarisés par collage.

7. Cartouche selon l'une quelconque des revendications précédentes, caractérisée en ce que l'élément filtrant (14) et la couronne mobile (16) sont entourés extérieurement par un filet (19) souple amovible, pouvant être retiré axialement.

8. Utilisation d'une cartouche selon l'une quelconque des revendications précédentes, caractérisée en ce que le fluide à filtrer traverse radialement l'élément filtrant (14) vers l'intérieur pour s'écouler par ledit canal.

## Patentansprüche

1. Zylindrische Kartusche (10) eines Filters zur Behandlung eines Fluids, die umfasst:
- zwei voneinander beabstandete Platten (11, 12),
- ein Umdrehungs-Filterelement (14) aus gefaltetem Filtermedium, das zwischen den Platten (11, 12) vorgesehen ist und zwei mit den Platten fest verbundene Böden aufweist,
- einen Axial-Innenkanal, der von dem Filterelement begrenzt wird, für das Strömen des Fluids, das radial durch das Filterelement (14) strömt,
- mindestens einen ringförmigen Verstärkungskranz (16) zur Aussteifung des Filterelements (14) und Halten der Falten (18), wobei der Kranz (16) das Filterelement (14) außen auf einer begrenzten Höhe einfasst, ohne mit diesem fest verbunden zu sein,
- wobei die Innenseite des beweglichen Kranzes (16) Zähne (17) aufweist, die radial hervorstehend verteilt sind und sich nach innen hin zwischen die Falten (18) fügen und den Abstand zwischen diesen erhalten, wobei der Abstand zwischen den Zähnen (17) dem Abstand zwischen den aufeinanderfolgenden Falten (18) des Filterelements (14) entspricht,
dadurch gekennzeichnet, dass der Kranz (16) durch einfache Reibung auf den Falten (18) zugänglich ist und bei der Reinigung der Kartusche (10) in Axialrichtung durch Gleiten in Richtung auf eine der Platten (11, 12) bewegt werden kann.

2. Kartusche nach Anspruch 1, dadurch gekennzeichnet, dass die Tiefe der Zähne (17) einen Bruchteil der Tiefe der Falten (18) des Filterelements (14) bildet.

3. Kartusche nach Anspruch 1, dadurch gekennzeichnet, dass das Filterelement (14) innen einen Kanal aufweist, der von einem perforierten Rohr (15) gebildet wird.

4. Kartusche nach Anspruch 1, dadurch gekennzeichnet, dass mehrere bewegliche Kränze (16) gestaffelt entlang dem Filterelement (14) vorgesehen sind.

5. Kartusche nach einem der vorstehenden Ansprüche, dadurch gekennzeichnet, dass der bewegliche Kranz (16) aus einem Kunststoff besteht, insbesondere aus Polypropylen.

6. Kartusche nach einem der vorstehenden Ansprüche, dadurch gekennzeichnet, dass das Filterelement (14) die Form eines hohlen Zylinders hat, dessen beide Böden von den Platten (11, 12) bedeckt sind, mit denen sie durch Kleben fest verbunden sind.

7. Kartusche nach einem der vorstehenden Ansprüche, dadurch gekennzeichnet, dass das Filterelement (14) und der bewegliche Kranz (16) außen von einem wegnehmbaren elastischen Netz (19) umgeben sind, das axial abgezogen werden kann.

8. Verwendung einer Kartusche nach einem der vorstehenden Ansprüche, dadurch gekennzeichnet, dass das zu filternde Fluid das Filterelement (14) radial nach innen durchströmt, um in den Kanal abzulaufen.

## Claims

1. A cylindrical cartridge (10) for a fluid treatment filter comprising:
- two plates (11, 12) spaced apart,
- a rotational filtering element (14) made of pleated filtering media inserted between the plates (11, 12) and having two base parts secured to said plates,
- an axial internal channel confined by the filtering element for passage of the fluid passing radially through the filtering element (14),
- at least one annular reinforcement rim (16) to rigidify the filtering element (14) and to keep the pleats (18), the rim (16) surrounding the filtering element (14) externally over a limited height without being fixedly secured thereto,
- the internal face of said movable rim (16) presents teeth (17) arranged protruding radially inwards to be inserted between the pleats (18) and to keep the distance between these teeth, the distance separating the teeth (17) corresponding to that of the successive pleats (18) of the filtering element (14),
characterized in that the rim (16) is accessible being held by simple friction on the pleats (18) and is movable in the axial direction by sliding towards one of the plates (11, 12) when cleaning of the cartridge (10) is performed.

2. The cartridge according to claim 1, characterized in that the depth of the teeth (17) is a fraction of the depth of the pleats (18) of the filtering element (14).

3. The cartridge according to claim 1, characterized in that the filtering element (14) is sheathed internally by a perforated tube (15) constituting said channel.

4. The cartridge according to claim 1, characterized in that several movable rims (16) are arranged at intervals along the filtering element (14).

5. The cartridge according to any one of the foregoing claims, characterized in that the movable rim (16) is made of plastic material, in particular polypropylene.

6. , The cartridge according to any one of the foregoing claims, characterized in that the filtering element (14) is of hollow cylindrical shape, the two base parts of which element are capped by said plates (11, 12) to which they are secured by sticking.

7. The cartridge according to any one of the foregoing claims, characterized in that the filtering element (14) and movable rim (16) are surrounded externally by a removable flexible net (19) able to be removed axially.

8. Use of a cartridge according to any one of the foregoing claims, characterized in that the fluid to be filtered passes radially through the filtering element (14) towards the inside to flow via said channel.
